# EUROPÄISCHE PATENTANMELDUNG

(11) **EP 0 687 408 A1**
(43) Veröffentlichungstag der Anmeldung: **20.12.1995**
(21) Anmeldenummer: 95109187.5
(22) Anmeldetag: 14.06.1995
(51) Int. Cl.: A01D 87/12, B65G 57/30

(54) **Verfahren und Pressballensammelgerät zum Abtransport von quaderförmigen Pressballen aus gepresstem Erntegut oder Ernterückständen**

(30) Priorität: 17.06.1994 DE 4422311
(71) Anmelder: Agrargenossenschaft Mühlberg e.G., D-04931 Weinberge (DE)
(72) Erfinder: Schurig, Dietmar, D-04931 Neuburxdorf (DE); Schmidt, Wilfried, D-04895 Martinskirchen (DE)
(74) Vertreter: Hanelt, Holger

(57) **Zusammenfassung**

Die Erfindung betrifft ein fahrbares Sammelgerät für den Abtransport von quaderförmigen Strohballen, daß als Anhängefahrzeug von Erntemaschine wie beispielsweise Mähdreschern, fahrbaren Strohpressen und dgl. betrieben werden kann und mit dem die von einer Erntemaschine ausgestoßenen Ballen gesammelt und geordnet einem Sammelpunkt zugeführt werden können.

Die Aufgabe der Erfindung ein Verfahren zum Abtransport von Preßballen und ein Preßballensammelgerät zu schaffen, das eine gezielte Abgabe der gesammelten Ballen ermöglicht und dabei den Aufwand der Stapelbildung verringert wird gelöst, indem die Ballen auf einer Rollenbahn aufgefangen, ausgerichtet und einem Hubspeicher zugeführt werden, wobei während der Zuführung eines neuen Ballens alle im Hubspeicher vorhandenen Ballen gehoben werden, der Ballen in den Hubspeicher unter den gehobenen Stapel eingefahren wird und die bereits im Hubspeicher vorhandenen Ballen auf diesen abgesenkt werden und die vorhergehenden Schritte so oft wiederholt werden, bis eine vorgesehene Ballenzahl erreicht ist.

Hierzu wird die technische Lösung mit verschiedenen Detaillösung beschrieben.

## Beschreibung

Die Erfindung betrifft ein fahrbares Sammelgerät für den Abtransport von quaderförmigen Preßballen aus gepreßtem Erntegut oder Ernterückständen wie zum Beispiel Strohballen, das als Anhängefahrzeug von Erntemaschine wie beispielsweise Mähdreschern, fahrbaren Strohpressen und dgl. betrieben werden kann und mit dem die von einer Erntemaschine ausgestoßenen Ballen gesammelt und geordnet einem Sammelpunkt wie dem Feldrain zugeführt werden können.

Bei der Ernte von Halmfrüchten und ähnlichen landwirtschaftlichen Produkten, bei denen die Blatt und Stengelmasse vom Feld verbracht werden muß, werden diese strohähnlichen Anteile oftmals schon in der Erntemaschine zu Ballen verpreßt. Diese Ballen werden von neben der Maschine herfahrenden Transportfahrzeugen oder in gesonderten Arbeitsgängen durch Sammelfahrzeuge aufgenommen. In beiden Fällen bedeutet das, daß die landwirtschaftliche Nutzfläche mehrmals mit relativ schwerer Technik befahren werden muß, was bekannterweise zu einer unerwünschten Bodenverdichtung führt.

Zur Verringerung dieser Bodenbelastung ist beispielsweise aus der DE 37 37 969 ein fahrbares Sammelgerät bekannt, mit dem eine Anzahl Ballen, in der dargestellten Form sind es sechs, zu einem flachen Block gesammelt und bei Vollständigkeit des Blockes auf dem Feld abgeworfen wird.

Damit verringert sich die Zahl der notwendigen Fahrten auf dem Feld. Das Einsammeln der Blöcke erfordert jedoch, wie leicht einzusehen ist, ebenfalls einen Fahraufwand, so daß hierdurch bestenfalls eine Verringerung der Bodenschädigung resultiert.

Aufgabe der Erfindung ist es demzufolge ein Verfahren zum Abtransport von Preßballen und ein Preßballensammelgerät zu schaffen, das eine gezielte Abgabe der gesammelten Ballen, beispielsweise beim Wenden der Maschine am Feldrain oder in der Nähe eines Sammelplatzes, ermöglicht und dabei den Aufwand der Stapelbildung verringert.

Die Aufgabe wird durch das in den Hauptansprüchen beschriebene Verfahren und die zugehörige Vorrichtung gelöst, indem durch die Vorrichtung vertikale Ballenstapel gebildet werden, die an festgelegten Punkten, auch ohne eine maschinentechnisch vorgegebene Anzahl erreicht zu haben, gezielt abgelegt werden können.

Bei einem erfindungsgemäßen Preßballensammelgerät, das auf einem als Fahrzeuganhänger wirkenden, gabelförmigen, entgegen der Fahrtrichtung offenen Hauptrahmen aufgebaut ist, werden die aus der Erntemaschine abgegebenen Preßballen auf eine aus einem Ballenzuführer und dem Rollenboden zusammengesetzten überwiegend horizontalen, Rollenbahn von der Ausgabestelle in Fahrtrichtung nach hinten, in den Bereich eines Vertikal arbeitenden Preßballenspeichers befördert. Zur Veringerung der Antriebskräfte kann die Rollenbahn mit leichtem nach hinten gerichteten Gefälle versehen sein.

Der vor dem Speicher angeordnete Ballenzuführer richtet die Ballen aus und dient gleichzeitig als Zwischenspeicher für Preßballen bei vollständiger Füllung oder während der Entleerung des Preßballenspeichers. Er besteht vorzugsweise aus einer zumindest teilweise getriebenen Rollenbahn mit seitlichen Führungsschienen. Durch einen Ausrichtmechanismus wird gewährleistet, daß der Ballenzuführer bei der Übernahme eines Ballens parallel zum Pressenkanal der Erntemaschine ausgerichtet wird, und anschließend in eine Lage verschoben wird, bei der ein reibungsloser Übergang auf den Rollenboden erfolgen kann.

Dazu ist es sinnvoll, wenn der Ballenzuführer um einen Punkt horizontal drehbar gelagert wird, der in der Nähe der Kupplung zwischen Erntemaschine und Preßballensammelgerät vorzugsweise direkt über dieser, angeordnet ist.

Um die Kraftaufnahme des Preßballensammelgerätes zu optimieren wird vorgeschlagen, die Ausrichtung der Ballenzuführung eine der beiden Richtungen durch passive Elemente, wie beispielsweise Federn zu realisieren, während die zweite Stellung über einen, die Stellkräfte der ersten Einrichtung überwindenden aktiven Antrieb, wie beispielsweise einen Hydraulikantrieb zu bewirken. Möglich ist hierbei jedoch auch, die bei der Bewegung eines Ballens auf dem Ballenzuführer auftretende Schwerpunktverlagerung für die Ausrichtung des Ballenzuführers zu nutzen.

In einer bevorzugten Ausführung wird der Ballenzuführer im normalen Fahrbetrieb durch eine Kombination von zwei außermittig an der Vorderkante des Ballenzuführers befestigten Ketten, deren andere Enden über eine gespannte Zugfeder mit der Erntemaschine verbunden sind, auf den Preßkanal ausgerichtet.

Um den Ballenzuführer zur Übergabe auszurichten wird in diesem Fall vorzugsweise ein Mechanismus verwendet, der wie folgt aufgebaut ist.

Am Rahmen des Ballenzuführers sind seitlich, vorzugsweise im vorderen Bereich zwei vorzugsweise gleichlange biegeschlaffe Elemente wie beispielsweise Ketten oder mit einem Gelenk versehene Stäbe befestigt. Deren hintere Enden sind untereinander verbunden und können mittels eines vorzugsweise linearen Antriebes zu einem Fixpunkt im Grundrahmen bewegt werden der so festgelegt ist, daß beide biegeschlaffe Elemente ihre vollständige Streckung erreicht haben. Wie leicht einzusehen ist, erreicht damit der Rahmen des Ballenzuführers eine genau definierte Lage bezüglich des Grundrahmens in der ein exakter Übergang des Ballens auf den Rollenboden möglich ist.

Der Preßballenspeicher besteht im wesentlichen aus einem auf den Grundrahmen aufgesetzten Gestell, mit einer vertikalen Parallelführung für die Ballen und einem ebenfalls vertikal geführten Hubeinrichtung.

Die Hubeinrichtung besteht aus einem zweiteiligen, auf beiden Seiten angeordneten, in einem Gestell geführten Hubgerüst mit daran angelenkten, sich überwiegend nach unten erstreckenden, quer zur Fahrtrichtung schwenkbaren Hubarmen. Am unteren Ende der Hubarme sind Tragfüße nach oben in eine überwiegend senkrechte Stellung schwenkbar so angeordnet, daß sie sich in der unteren Stellung insgesamt vorwiegend waagerecht und quer zur Fahrtrichtung in Richtung der Farzeugmittelachse erstrecken. Das Hubgerüst befindet sich in der unteren Lage auf einer Höhe, bei der die Tragfüße zwischen den losen Rollen des Rollenbodens angeordnet sind. Über einen auf beide Hubeinrichtungen wirkenden Antrieb kann das Hubgerüst um einen Betrag, der größer als die maximale Höhe der zu stapelnden Ballen ist, angehoben werden.

Die Funktion eines erfindungsgemäßen Preßballensammelgerät kann wie folgt beschrieben werden.

Ein Ballen, der aus dem Preßkanal der Erntemaschine ausgepreßßt wird, gleitet auf den zum Preßkanal ausgerichteten Ballenzuführer. Der Ballenzuführer wird durch eine geeignete Vorrichtung auf den Rollenboden ausgerichtet und der Ballen über lose Rollen und getriebene Rollen zum Rollenboden befördert.

Im Preßballenspeicher werden beim Vorhandensein eines Ballens auf dem Ballenzuführer die bereits im Speicher befindlichen Ballen durch die Hubvorrichtung angehoben, bis der Ballen durch die Rollenbahn in die Stapelposition eingefahren wurde. Danach wird der gehobene Ballen/Ballenstapel auf den neu eingefahrenen Ballen abgesenkt. Dabei werden kurz oberhalb des Ballens die Hubarme durch eine Steuerung beispielsweise durch eine Kulissenführung soweit gespreizt, daß die Tragfüße weitestgehend aus dem Bereich der Ballen entfernt werden. Beim weiteren Absenken klappen die Tragfüße nach oben und gleiten über die Außenseiten des Ballens, um unterhalb des Ballens wieder in die waagerechte Lage zu klappen, dadurch wird bei der nächsten Aufwärtsbewegung der Hubeinheit auch der unterste Ballen mit angehoben.

Zum Absetzen des Stapels wird der Rollenboden durch Anheben des Stapels mittels der Hubvorrichtung entlastet und aus dem Bereich unterhalb des Stapels entfernt. Dazu können beispielsweise beide Hälften des in der Längsachse geteilten Rollenbodens nach unten oder oben abgeklappt werden. Ebenso ist es bei entsprechende Gestaltung von Rollenboden und Ballenzuführer möglich, den Rollenboden unter den Ballenzuführer zu schieben. Beim danach erfolgenden Absenken der Hubeinrichtung fällt der gesamte Stapel beim seitlichen Abziehen der Tragfüße dadurch bis auf den Untergrund herab.

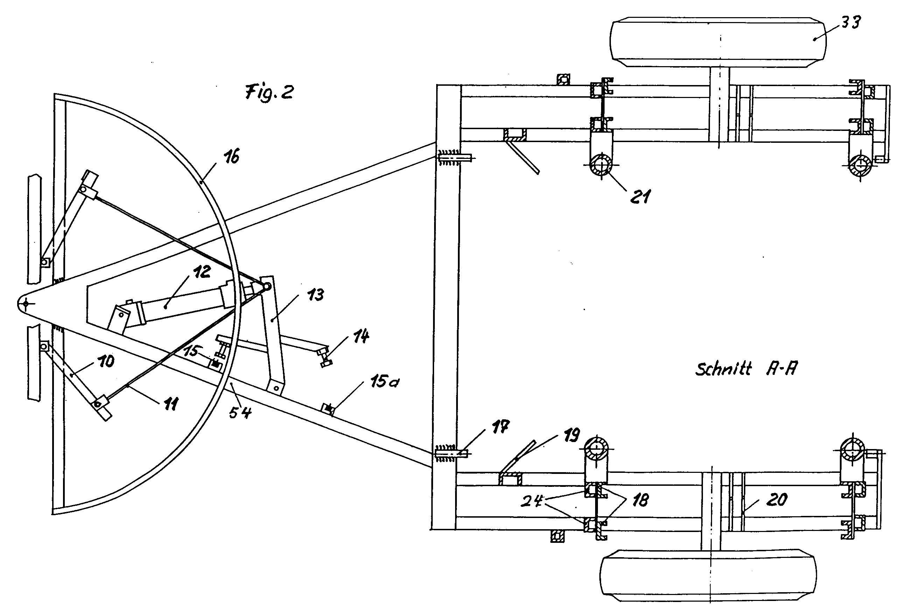

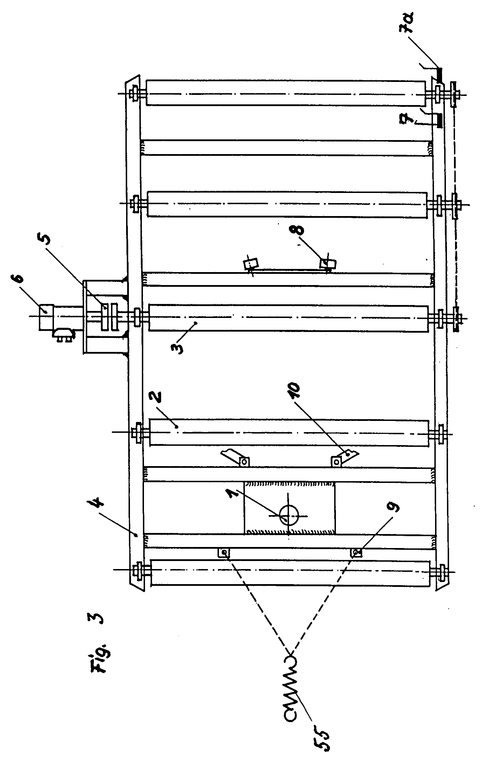

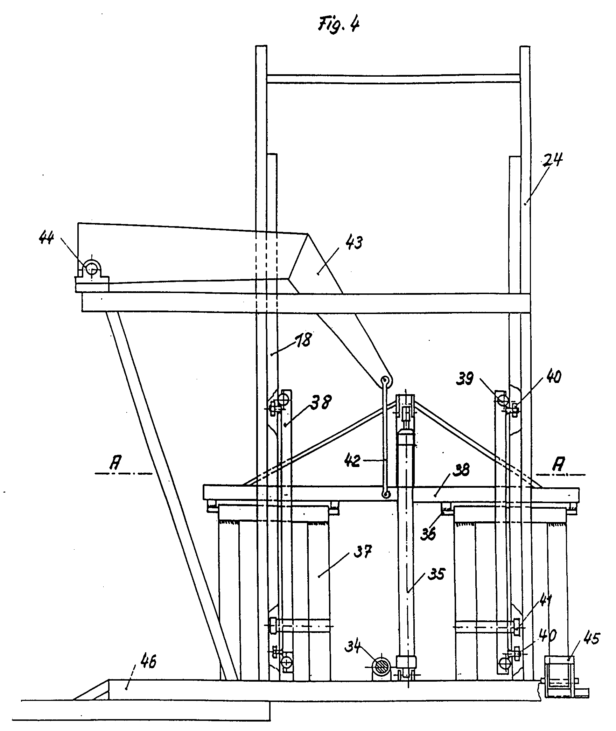

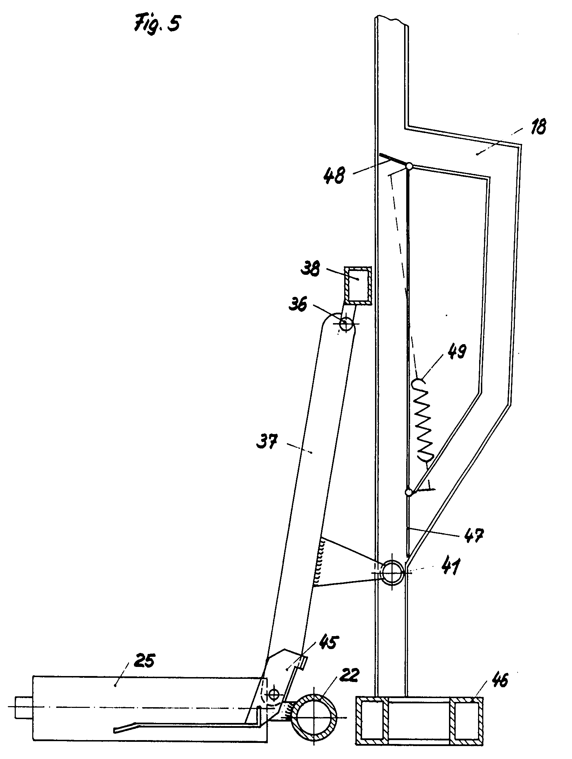

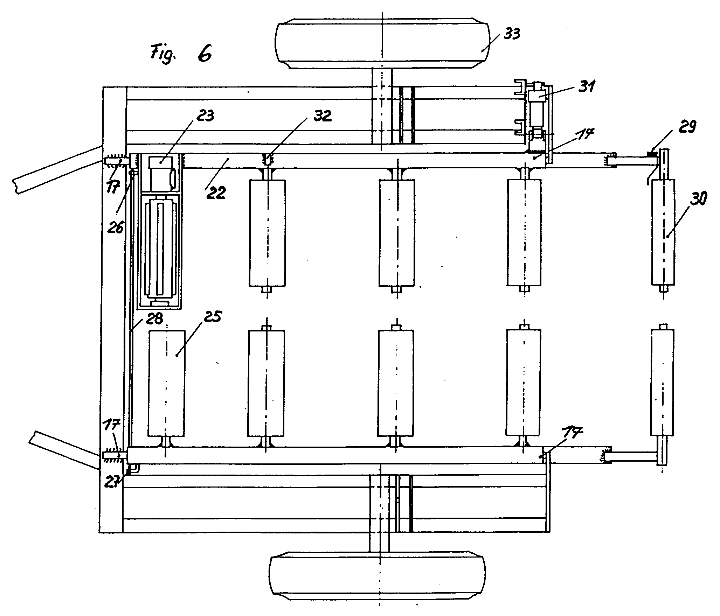

Die Erfindung soll im Folgenden anhand der Zeichnungen Figuren 1 bis 6 in einem Ausführungsbeispiel beschrieben werden.

Dabei zeigt
- Fig. 1: eine Seitenansicht des erfindungsgemäßen Preßballensammelgerätes,
- Fig. 2: eine Draufsicht des Hauptrahmens,
- Fig. 3: die Ballenzuführer in der Draufsicht,
- Fig. 4: den Preßballenspeicher,
- Fig. 5: einen Schnitt durch die Hubeinrichtung mit der als Kurvenbahn ausgestalteten Bewegungssteuerung für einen Hubarm (37) und
- Fig. 6: eine Draufsicht auf den unterhalb der Hubeinrichtung angeordneten Rollenboden.

Ein erfindungsgemäßes Preßballensammelgerät besteht aus einem nach hinten geöffnetem U-förmigen Hauptrahmen 46 mit zwei seitlich angeordneten Rädern 33, dem darauf angeordneten Ballenheber, einem in der rechteckigen Aussparung des Hauptrahmens 46 unterhalb des Ballenhebers angeordneten Rollenboden, dem von den vorderen Ecken des Hauptrahmens 46 nach vorn zu einer Anhängerkupplung dreieckförmig zulaufenden Zugrahmen 54 und einer über dem Zugrahmen beweglich angeordnetem Ballenzuführer 4-10.

Dabei ist die aus Ballenzuführer F1 und Rollenboden F3 gebildete Rollenbahn mit einem nach hinten gerichteten Gefälle von 3° versehen, wodurch der nach hinten gerichtete Ballentransport unterstützt wird.

Der oberhalb des Zugrahmens 54 angeordnete Ballenzuführer F1 Besteht aus einem Rahmen, in dem zwei lose Rollen 2 und drei getriebene Rollen (3) gelagert sind und ist auf dem Ballenzuführer F1 in einem Lager 1 um eine vertikale Achse drehbar gelagert und liegt in seinem hinteren Bereich mit zwei Stützrollen 8 auf einer Stützschwinge 16 auf.

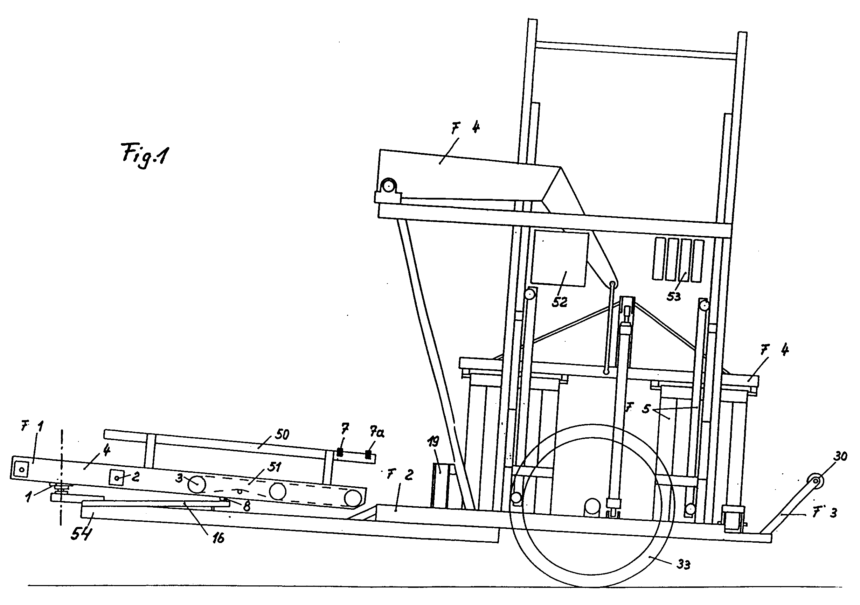

Über zwei Gliederketten und eine mittig angeordnete, gespannte Zugfeder 55 ist der Ballenzuführer F1 mit der voranfahrenden Erntemaschine verbunden. Während des normalen Betriebes der Presse sorgt die Zugfeder 55, somit für eine ständige Parallelführung des in Fig. 1 dargestellten Ballenzuführers zum Preßkanal der Presse.

Unterhalb des Ballenzuführers F1 ist im vorderen Bereich beidseitig je ein Koppeleisen 10 angelenkt, das über je eine Zugstange 11 mit einer im Zugrahmen 54 angeordneten Lenkstange 13 verbunden ist. Mittels eines Hydraulikzylinders 12 ist diese Lenkstange 13 in der Ebene des Zugrahmens 54 zwischen zwei Endlagen, die über zwei Tasterschalter 15 realisiert werden, verstellbar. Die hintere Endlage wird dabei über eine Stellschraube 14 so justiert, daß beide aus Koppeleisen 10 und gebildete Koppeln fast vollständig gestreckt sind. Wie leicht zu erkennen ist, wird dadurch der Ballenzuführer F1 ggf. gegen den Widerstand der Zugfeder 55 parallel zur Längsachse des Zugrahmens 54 ausgerichtet.

Der Rahmen 4 des Ballenzuführers trägt außer der Lagerung der losen und der angetrieben Rollen 2, 3 einen Hydraulikmotor 6 und die Kupplung 5 zum Antrieb der angetriebenen Rollen zur Förderung des Ballens auf den Rollenboden F3. Dabei ist die Kupplung 5 mit einem Freilauf versehen, der das Mitdrehen der angetriebenen Rollen in Richtung des von der Presse geschobenen Ballens gewährleistet.

Hinter dem Ballenzuführer F1 ist in einer rechteckigen Aussparung des Hauptrahmens F2 der Rollenboden F3 angeordnet. Dieser besteht im wesentlichen aus zwei Reihen von je vier Rollen 25 die sich von den Seiten der Aussparung des Hauptrahmens F2 bis in die Nähe der Fahrzeuglängsachse erstrecken. Diese Rollen (25) sind an zwei Kipprohren 22 befestigt, die mit je zwei Lagern 17 an den Längsholmen des Hauptrahmens F2 angelenkt sind.

Von diesen Rollen, die in waagerechter Lage annähernd bis in die Mitte des Rollenbodens F3 reichen, ist eine der beiden in Fahrtrichtung vorderen über eine Hydraulikmotor 23 antreibbar während es sich bei allen anderen um lose Rollen 25 handelt. Nach hinten über den Hauptrahmen F2 hinausreichende Verlängerungen des Kipprohres 22 tragen je eine parallel oberhalb der Ebene der losen Rollen 25 angeordnete Anschlagrolle 30. Durch einen am hinteren Ende des Hauptrahmen F2 angeordneten Hydraulikzylinder 31 und eine beide Kipprohre 22 verbindende Zugstange 28 können beide Kipprohre 22 um 90° gedreht werden, so daß die Rollen 25 aus einer waagerechten in eine senkrechte nach oben gerichtete Position geschwenkt werden können. Dabei werden gleichzeitig die Anschlagrollen 30 aus dem Bereich der hinteren Verlängerung des Lichtraumes des Ballenlagers geschwenkt.

Für eine weitere Ausrichtung des in den Rollenboden F3 einlaufenden Ballens sind auf dem vorderen Hauptrahmen F2 in einem Abstand, der annähernd der Ballenbreite entspricht 2 als Einweiser 19 bezeichnete Führungsschienen angeordnet, deren Abstand sich von vorn nach hinten verringert.

Über dem Rollenboden F3 ist auf dem Hauptrahmen F2 stehend das Ballenlager angeordnet.

Dieses besteht aus einem Hebergestell 24, vier innerhalb dessen vertikal verlaufenden, zylinderförmigen Höhenführungen 21, einer im Hebergestell 24 geführten Hubeinrichtung sowie dem an einer nach vorn aus dem Hebergestell 24 herausragenden Verstrebung gelagertem Ausgleichsarm 43.

Die Hubeinrichtung setzt sich aus zwei beidseitig angeordneten symmetrisch aufgebauten Teilen zusammen. Diese bestehen wiederum aus den über vertikale Streben am Hebergestell 24 laufenden Hubgerüst 38 das über je einen auf dem Hauptrahmen F2 gelagerten Hydraulikzylinder 35 gehoben und gesenkt werden kann. Um die Synchronität der Bewegung beider Hälften des Hubgerüstes 38 zu gewährleisten, sind beide Teile über Druckstangen 42 mit dem U-förmigen Ausgleichsarm 43 verbunden.

In Lagern 36, die an der Unterseite der Quertraversen des Hubgerüstes 38 angeordneten sind, werden auf beiden Seiten vier Hubarme 37 quer zur Fahrtrichtung pendelbar in einem Abstand aufgehängt, der den Zwischenräumen der Rollen 25 des Rollenbodens F3 entspricht. Je zwei der Hubarme 37 sind miteinander und mit einer in das Hebergestell 24 ragenden Führungsrolle 41 verbunden. Die Führungsrolle 41 wird ihrerseits in eine am Hebergestell 24 befestigten Kurvenbahn 18 geführt. An den unteren Enden der Hubarme 37 ist je ein aus einer Waagerechten in eine senkrechte Stellung klappbarer Fuß 45 befestigt. Diese Füße erstrecken sich jeweils über ein Drittel der Breite des Rollenbodens F3 liegen in der tiefsten Lage des Hubgerüstes 38 parallel zu den Rollen 25 des Rollenbodens F3 zwischen diesen.

Diverse Taster dienen im Zusammenwirken mit der Elektroniksteuerung 52 und der Hydrauliksteuerung 53 der Koordinierung der Abläufe.

Die Vorrichtung arbeitet wie folgt:
Aus dem Preßkanal der Erntemaschine wird der Preßgutballen kontinuierlich auf den Ballenzuführer F1 geschoben, wobei er anfangs von den losen Rollen 2 und in der weiteren Folge von den angetriebenen Rollen 3 getragen wird.

Mit Erreichen der Tasterzunge des Tasters 7 erfolgt die Aktivierung des Hydraulikzylinders 12, damit das Schalten des Tasters 15a und in der weiteren Folge die des Hydraulikmotors 6 und die Weiterförderung des Ballens auf den Rollenboden. Mit dem Ausfahren des Zylinders 12 wird dabei über Zugstange 11 und Koppeleisen 10 eine Streckung des gesamten Gestänges vollzogen und die Parallelstellung des Ballenzuführers F1 zum Rollenboden F3 erreicht.

Dieses Prinzip gewährleistet, daß zum einen der Ballenzuführer bei Normalbetrieb von der Zugfeder 55 ständig in Parallelstellung zur Presse gehalten wird und zum anderen vor der Übergabe auf den Rollenboden F3 in Parallelstellung zu diesem gebracht werden kann. Dabei wird in Knickstellung von Presse und Gerät die Federkraft der Zugfeder 55 von der Kraft des Hydraulikzylinders 12 überwunden. Dies ist zum Beispiel bei Kurvenfahrten der Fall. Ein Schwenkbereich von etwa 80 Grad nach beiden Seiten läßt dabei auch sehr enge Kurven zu.

Gleichzeitig mit der Ausrichtung des Ballenzuführers F1 werden die angetrieben Rollen 3 in Drehung versetzt und gewährleisten so das Fördern des Ballens.

Das exakte Führen und Übergeben des Ballens auf den Rollenboden wird zum einen durch die Ballenführung 50 des Ballenzuführers gewährleistet und zum anderen durch die Einweiser 19, die vor dem Rollenboden am Rahmen angebracht sind.

In der weiteren Folge wird der Ballen an den Rollenboden F3 übergeben, wobei die treibende Rolle 23, die mit Mitnehmern versehen ist, das Fördern bis zur Endlage gewahrleistet. Dabei haben die losen Rollen lediglich eine tragende Funktion. In Endlagenposition befinden sich zum einen die Anschlagrollen 30, die ein ungewolltes Abrollen des Ballens nach hinten verhindern, und zum anderen der Taster mit Tasterzunge 29, der den Fördervorgang des Ballens beendet und den Hubvorgang einleitet.

Um das ungehinderte Nachfördern der folgenden Ballen zu gewährleisten, wird der sich auf dem Rollenboden F3 befindliche Ballen von einem kurvenbahngesteuerten Hubarm 37 angehoben.

In dieser angehobenen Stellung wird er solange gehalten, bis der nachfolgende Ballen die Endlagenstellung an den Anschlagrollen 30 erreicht hat und den erneuten Hubvorgang einleitet. Dabei senkt sich der Hubarm und legt den angehobenen Ballen auf den auf dem Rollenboden befindlichen Ballen ab. Bei diesem Vorgang zieht sich der beweglich gelagerte Fuß 45 des Hubarmes bedingt durch die Steuerung der Kurvenbahn und die damit verbundene Seitwärtsbewegung des Hubarmes unter dem angehobenen Ballen hervor und gewährleistet so ein sanftes Ablegen auf dem unter ihm befindlichen Ballen.

Dieser Vorgang wird durch das Zusammenwirken der Kurvenbahn 18 mit der Führungsrolle 41 wie folgt gesteuert.

Während der Aufwärtsbewegung des Hubgerüstes 38 wird der Hubarm 37 nachgezogen und von seiner Führungsrolle 41 in der geraden Bahn der Kurvenbahn 18 geführt. Bei Erreichen der oberen Klappe 48 wird die Kraft der Zugfeder 49 überwunden und gibt den Weg nach oben frei. Kurz über der Klappe 48 ist die obere Stellung des Hubarmes 37 erreicht. In dieser Stellung wird der Fördervorgang des nächsten Ballens eingeleitet. Hat dieser den Taster 29 erreicht, wird die Abwärtsbewegung des Hubgerüstes 38 eingeleitet. Die Klappenstellung der Klappe 48 bewirkt dabei das Auslenken der Führungsrolle 41, wodurch der Fuß des Hubarmes 45 unter dem Ballen hervorgezogen wird. Da jedoch die Oberkante des auf dem Rollenboden liegenden Ballens und der Fuß des Hubarmes 45 während der Auslenkung in einer Ebene liegen, erfolgt ein relativ sanftes Ablegen des auf dem Fuß befindlichen Ballens. Durch die Beweglichkeit des Hubarmfußes 45 wird das Herausziehen desselben aus dem Ballenstapel erleichtert.

Dieser Vorgang kann bis maximal fünf mal wiederholt werden bevor ein Sicherungsmechanismus der in der Nähe der Elektrosteuerung 52 angebracht ist, den weiteren Hubvorgang unterbricht und alle weiterhin ankommenden Ballen ungehoben nach hinten durchlaufen läßt. Dabei wird der Fahrer durch ein Licht- und Hupsignal zum Abladen der gesammelten Ballen aufgefordert. Möchte er dieses nicht, kann die Presse wie ohne Sammelgerät weiter betrieben werden. Entscheidet sich der Fahrer der Presse für das Abladen des Stapels, kann er es in der Zeit tun, in der sich ein oder mehrere Ballen im angehobenen Zustand befinden. In der Phase, wo der Fördervorgang durch Betätigen des Tasters 7 eingeleitet worden ist, kann nicht abgeladen werden. In diesem Fall muß der gesamte Hubvorgang abgewartet und erst nach dessen Abschluß kann der Abladevorgang eingeleitet werden. Dabei ist vom Fahrer ein elektrischer Impuls zu geben, der wiederum das hydraulische Hochklappen des Rollenbodens F3 mittels Hydraulikzylinder 31 veranlaßt. Nach Abschluß dieses Vorganges wird sofort das Herabsenken der Hubarme 37 eingeleitet, was bedingt durch die Steuerung der Kurvenbahn genau so vonstatten geht als ob es einen auf dem Rollenboden liegenden Ballen ablegen würde.

Da jedoch der Rollenboden hochgeklappt ist, fällt der gesamte Stapel bis auf den Boden durch. Um dabei die exakte Stapelung beibehalten zu können, sollte die Arbeitsgeschwindigkeit während des Abladens geringfügig und kurzzeitig verringert werden. Kann man jedoch ein geringfügiges Verrutschen der oberen Ballen in Kauf nehmen, ist das Beibehalten der vollen Arbeitsgeschwindigkeit auch möglich.

Ist der Entladevorgang abgeschlossen, geht der Hubarm 37 sofort wieder in Ausgangsstellung angehoben zurück und der Rollenboden F3 kann wieder in Arbeitsstellung gebracht werden. Dies geschieht erst, wenn durch den nachfolgenden Ballen der Taster 7a betätigt wird und der nächste Fördervorgang eingeleitet werden soll. Dieser beginnt dann mit Herunterklappen des Rollenbodens F3 und erfolgt weiterhin wie beschrieben.

## Patentansprüche

1. Verfahren zum Abtransport von quaderförmigen Preßballen aus gepreßtem Erntegut oder Ernterückständen
dadurch gekennzeichnet, daß
die von einer Erntemaschine abgegebenen Ballen auf einer Rollenbahn aufgefangen, ausgerichtet und einem Hubspeicher zugeführt werden,
während der Zuführung eines neuen Ballens alle im Hubspeicher vorhandenen Ballen um einen Betrag gehoben werden, der größer als die Höhe des neuen Ballens ist,
der Ballen in den Hubspeicher bis zu einem Endanschlag eingefahren wird,
nachdem der neue Ballen einen Endanschlag erreicht hat, die bereits im Hubspeicher vorhandenen Ballen auf diesen abgesenkt werden,
die vorhergehenden Schritte so oft wiederholt werden, bis eine vorgesehene Ballenzahl erreicht ist,
und der dadurch entstandene Stapel durch Absenken auf den Erdboden entladen wird.

2. Preßballensammelgerät zum Sammeln und Transport von quaderförmigen Ballen von gepreßtem Erntegut oder Ernterückständen als Nachlaufgerät für Erntemaschinen aus einem fahrbaren, mit der Erntemaschine gekoppelten Gestellrahmen, einer Speichereinheit und einem Horizontalvorschub, dadurch gekennzeichnet, daß
der Horizontalvorschub sich aus dem unter dem Ballenauswurf der Erntemaschine angeordneten, durch eine Ausrichtanordnung wahlweise auf die Längsachse der Erntemaschine oder die Längsachse der Speichereinrichtung ausrichtbaren Ballenzuführer (F1) und dem unter der Speichereinrichtung befindlichen Rollenboden zusammensetzt und aus einer vorwiegend horizontal und geradlinig verlaufenden Rollenbahn aus getriebenen und ungetriebenen Rollen besteht, daß weiterhin die Speichereinrichtung aus einer Vertikalführung und einer Hubeinrichtung besteht.

3. Preßballensammelgerät nach Anspruch 2, dadurch gekennzeichnet, daß, die Hubeinrichtung aus einem, durch einen linearen Antrieb in einer vertikalen Führung verschiebbaren Hubgerüst (38) mit daran angelenkten, sich vorwiegend nach unten erstreckenden Hubarmen (37) besteht, wobei an den unteren Enden der Hubarme (37) aus einer waagerechten Stellung nach oben abklappbare Tragfüße (45) angeordnet sind, wobei sich die Tragfüße (45) in der untersten Stellung zwischen den Rollen (25) des Rollenbodens befinden und
daß weiterhin die Hubarme längs und beidseitig des Rollenbodens so angeordnet sind, daß sich die Tragfüße (45) in der unteren Lage des Hubgerüstes (38) parallel zwischen den Rollen des Rollenbodens befinden und sich die nach oben beweglichen Enden der Tragfüße (45) in Richtung Mitte des Rollenbodens erstrecken,
daß weiterhin eine Steuerung der Hubarme (37) vorhanden ist, durch die die Hubarme (37) bei der Abwärtsbewegung nach außen bewegt werden.

4. Preßballensammelgerät nach Anspruch 3, dadurch gekennzeichnet,
daß die Steuerung der Hubarme (37) über eine Kulissenführung aus Kurvenbahnen (18) mit darin laufenden, mit den Hubarmen (37) verbundenen Führungsrollen (41) besteht, bei denen durch Umsteuervorrichtungen unterschiedliche Bewegungsabläufe bei der Auf- und Abbewegung erzeugt werden.

5. Preßballensammelgerät nach Anspruch 3, dadurch gekennzeichnet,
daß das Hubgerüst (38) aus einem u-förmigen, nach hinten geöffneten, vorwiegend horizontalen Rahmen besteht, der an den vier Eckpunkten in einer Parallelführung läuft und über je einen Hydraulikzylinder vertikal bewegt wird.

6. Preßballensammelgerät nach einem der Ansprüche 2 bis 5, dadurch gekennzeichnet,
daß das Hubgerüst (38) aus zwei Längstraversen besteht, die an den vier Eckpunkten in einer Parallelführung laufen und über je einen Hydraulikzylinder vertikal bewegt werden und die beiden Teile des Hubgerüstes (38) über eine Druckstange (42) mit einem am und Ausgleichsarm (43) miteinander verbunden sind.

7. Preßballensammelgerät nach einem der Ansprüche (2) bis 5, dadurch gekennzeichnet,
daß der Rollenboden (F3) so gestaltet ist, daß die Rollen (25) mit einem mechanischen Antrieb aus dem Bereich unterhalb der Speichereinheit entfernt werden können.

8. Preßballensammelgerät nach einem der Ansprüche (2) bis 5, dadurch gekennzeichnet,
daß der Rollenboden (F3) aus zwei Reihen Rollen (25) besteht, die sich von den Längsholmen des Hauptrahmens (F2) quer zur Fahrtrichtung, zur Mitte des Hauptrahmen (F2) erstrecken und am Hauptrahmen (F2) nach oben klappbar befestigt sind.

9. Preßballensammelgerät nach einem der Ansprüche (2) bis 5, dadurch gekennzeichnet,
daß der Rollenboden (F3) aus zwei Reihen Rollen (25) besteht, die sich von den Längsholmen des Hauptrahmens (F2) quer zur Fahrtrichtung, zur Mitte des Hauptrahmen (F2) erstrecken und am Hauptrahmen (F2) mit zwei in Lagern (17) geführten Kipprohren (22) angelenkt sind und mit Hilfe eines Hydraulikzylinders (31) sowie zweier durch eine Zugstange (28) verbundener Kurbeln (26 und 27) nach oben klappbar sind.

10. Preßballensammelgerät nach einem der Ansprüche (2) bis 5, dadurch gekennzeichnet,
daß die Rollen (25) des Rollenbodens (F3) die sich von den Längsholmen des Hauptrahmens (F2) quer zur Fahrtrichtung, über die gesamte Breite des Hauptrahmen (F2) erstrecken, am Hauptrahmen (F2) in zwei, bis unter den Ballenzuführer (F1) reichenden Führungsschienen in Fahrtrichtung verschiebbar gelagert sind und mittels einer Zugvorrichtung aus dem Bereich unterhalb der Speichereinheit unter den Ballenzuführer (F1) und zurück verschoben werden können.

11. Ausrichtanordnung für ein Übergabeband vorzugsweise einen Ballenzuführer (F1) eines Preßballensammelgerätes nach einem der voranstehenden Ansprüche 2 bis 6 dadurch gekennzeichnet, daß an zwei vom Drehpunkt (1) des Rahmens (4) gesehen gegenüberliegenden Punkten (a) je ein biegeschlaffes Element (10/11) angelenkt ist, deren andere Enden miteinander verbunden sind,
wobei der Knotenpunkt beider biegeschlaffer Elemente mittels eines bekannten Antriebs (12)
von einem Punkt (b), der innerhalb eines Umkreises, dessen Radius der Differenz von der Länge des kürzeren biegeschlaffen Element und dem Abstand des Abstandes des Drehpunktes (1) zum Punkt (a) entspricht, angeordnet ist,
zu einem Punkt (c), der dem Schnittpunkt der von den vollständig gestreckten biegeschlaffen Elementen bei ausgerichtetem Rahmen (4) beschriebenen Kreise entspricht, verschiebbar ist.

12. Ausrichtanordnung für ein Übergabeband vorzugsweise einen Ballenzuführer (F1) eines Preßballensammelgerätes nach Anspruch 7 dadurch gekennzeichnet, daß die biegeschlaffen Elemente Ketten vorzugsweise gleicher Länge sind.

13. Ausrichtanordnung für ein Übergabeband vorzugsweise einen Ballenzuführer (F1) eines Preßballensammelgerätes nach Anspruch 7 dadurch gekennzeichnet, daß die biegeschlaffen Elemente zwei oder mehrere durch Gelenke verbundene Stäbe sind.

14. Ausrichtanordnung für ein Übergabeband vorzugsweise einen Ballenzuführer (F1) eines Preßballensammelgerätes nach Anspruch 7 dadurch gekennzeichnet, daß der Antrieb ein am Zugrahmen (54) angelenkter Hydraulikzylinder (12) ist, dessen zweites Ende über eine Kurbel (13) geführt ist.

15. Ausrichtanordnung für ein Übergabeband vorzugsweise einen Ballenzuführer (F1) eines Preßballensammelgerätes nach Anspruch 7 dadurch gekennzeichnet, daß der Antrieb eine Zugfeder ist, bei der der Punkt (c) durch die kürzeste Federlänge fixiert ist.

16. Preßballensammelgerät nach einem der voranstehenden Ansprüche, dadurch gekennzeichnet, daß eine Steuerung (52/53) vorhanden ist, die mittels der Taster (7, 15 und 29) den verfahrensgemäßen Ablauf sichert.
